(19) Europäisches Patentamt
European Patent Office
Office européen des brevets

(11) Veröffentlichungsnummer: **0 175 092**
**B1**

(12) **EUROPÄISCHE PATENTSCHRIFT**

(45) Veröffentlichungstag der Patentschrift: **03.10.90**

(51) Int. Cl.$^5$: **C 09 D 7/06,** C 08 L 67/06

(21) Anmeldenummer: **85109207.2**

(22) Anmeldetag: **23.07.85**

(54) **Lacke und Formmassen mit einem den Verlauf fördernden und die Gleitfähigkeit erhöhenden Gehalt an Siloxanen und die Verwendung solcher Siloxane als Zusatzmittel für Lacke und Formmassen.**

(30) Priorität: **24.07.84 DE 3427208**

(43) Veröffentlichungstag der Anmeldung:
**26.03.86 Patentblatt 86/13**

(45) Bekanntmachung des Hinweises auf die Patenterteilung:
**03.10.90 Patentblatt 90/40**

(84) Benannte Vertragsstaaten:
**AT BE CH DE FR GB IT LI LU NL SE**

(56) Entgegenhaltungen:
**EP-A-0 031 887**
**EP-A-0 165 849**
**CA-A- 970 896**
**DE-A-1 495 975**
**FR-A-2 007 788**
**FR-A-2 265 834**

(73) Patentinhaber: **Byk-Chemie GmbH**
**Abelstrasse 14**
**D-4230 Wesel (DE)**

(72) Erfinder: **Haubennestel, Karlheinz**
**Hermann-Hesse-Strasse 30**
**D-4230 Wesel 1 (DE)**
Erfinder: **Bubat, Alfred**
**Gotenstrasse 19**
**D-4230 Wesel-Bislich (DE)**

(74) Vertreter: **Türk, Dietmar, Dr. rer. nat. et al**
**Türk, Gille + Hrabal Patentanwälte**
**Brucknerstrasse 20**
**D-4000 Düsseldorf 13 (DE)**

**EP 0 175 092 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft Lacke und Formmassen mit einem den Verlauf fördernden und die Gleitfähigkeit erhöhenden Gehalt an polyestermodifizierten Siloxanen sowie die Verwendung dieser Siloxane zur Förderung des Verlaufs und zur Erhöhung der Gleitfähigkeit von Lacken und Formmassen.

Aus DE—C—1 111 320 und DE—C—1 092 585 ist es bereits bekannt, Lacken niedermolekulare Dimethylpolysiloxane und Methylphenylpolysiloxane zuzusetzen, um ihre Verlaufeigenschaften zu verbessern und ihre Kratzfestigkeit und Gleitfähigkeit zu erhöhen. Die Zugabe von Dimethylpolysiloxanen führt jedoch in vielen Fällen zu unerwünschten Trübungen in unpigmentierten Beschichtungsstoffen sowie zu schlechten Verlaufeigenschaften, was sich in einer sogenannten Narbung bemerkbar macht. Wenn die Molekulargewichte dieser reinen Polydimethylsiloxane zu hoch gewählt werden, treten starke Störungen in den Beschichtungsstoffen auf, die als Kratzer oder sogenannte Fischaugen erkennbar sind (vgl. Wagner/Sarx, Lackkunstharze (1971), S. 166).

Polymethylphenylsiloxane sind zwar meist gut verträglich in den Beschichtungsstoffen und führen auch zu einer Verbesserung der Verlaufeigenschaften der Lacke, denen sie zugesetzt werden, die damit erzielbare Kratzfestigkeit ist jedoch unzureichend.

Aus "Goldschmidt informiert", 7/1982, Nr. 56, Seite 2 und 6. Fatipec Kongress, 1962, Seiten 332, ist es auch bereits bekannt, Lacken polyoxyalkylenmodifizierte Dimethylpolysiloxane zuzusetzen, um ähnliche Effekte zu erreichen. Hier soll der Polyoxyalkylenrest dazu dienen, die Verräglichkeit in den Beschichtungsstoffen zu verbessern.

Tatsächlich weisen die zugesetzten polyoxyalkylenmodifizierten Dimethylpolysiloxane eine gute Verträglichkeit mit vielen Lacken auf, sie führen aber auch zu einem unerwünschten Strukturaufbau, der sich darin äußert, daß beim Walzauftrag solcher Lacke, wie er beim sogenannten "Coil Coating" üblich ist, eine unerwünschte Riefenstruktur auftritt. Außerdem sind polyoxyalkylenmodifizierte Dimethylpolysiloxane thermisch nicht stabil, was besonders bei Trocknungstemperaturen oberhalb 150°C zu Problemen führt. Diese thermische Instabilität führt dazu, daß beim Abbau der Polyoxyalkylenkette unverträgliche Reaktionsprodukte auftreten, die zu einer verschlechterten Zwischenschichthaftung führen. Dies kann so weit gehen, daß die zweite Schicht mühelos von der ersten Schicht abgezogen werden kann. In diesem Falle wirken diese Siloxane wie Trennmittel (vgl. Wagner/Sarx, Lackkungststoffe (1971), S. 166).

Aus FR—A—2 007 788 sind polyestermodifizierte Siloxane bekannt, die Lacken zugesetzt werden, um ihre Verlaufeigenschaften und ihre Gleitfähigkeit zu erhöhen. Diese Zusätze weisen jedoch ebenfalls eine unzureichende thermische Stabilität auf. Diese hat ihre Ursache darin, daß diese bekannten Lackzzsätze zusätzlich noch Polyäthereinheiten im Molekül aufweisen, die bei Verarbeitungstemperaturen oberhalb 130 bis 150°C thermisch abgebaut werden. Die Folge dieses thermischen Abbaus sind Haftungsverluste bei mehrschichtigem Lackaufbau oder schlechte Schweißbarkeit bei Einsatz in Kunststoffen. Der thermische Abbau dieser bekannten polyätherhaltigen Siloxane beginnt bereits bei 130 bis 150°C und führt zu einer deutlichen Abnahme der Haftung bei Zweischichtlacken, wie sie in der Automobilindustrie üblich sind, zwischen der ersten und der zweiten Lackschicht.

Aufgabe der Erfindung war es daher, die Verlaufeigenschaften und die Gleitfähigkeit von Lacken und Formmassen verbessernde polyestermodifizierte Siloxane zu finden, die eine höhere Thermostabilität als die bischer verwendeten Siloxan-Zusätze aufweisen.

Es wurde nun gefunden, daß diese Aufgabe erfindungsgemäß gelöst werden kann durch Verwendung der nachstehend definierten polyethergruppenfreien, polyestermodifizierten Siloxane als Zusätze zu Lacken und Formmassen, welche die Verlaufeigenschafte, die Kratzfestigkeit und die Gleitfähigkeit der Lacke und Formmasse verbessern.

Gegenstand der Erfindung sind Lacke und Formmassen mit einem den Verlauf fördernden und die Gleitfähigkeit erhöhenden Gehalt an polyestermodifizierten Siloxanen, die dadurch gekennziechnet sind, daß die Siloxane polyestergruppenhaltige Siloxane der folgenden Formel sind

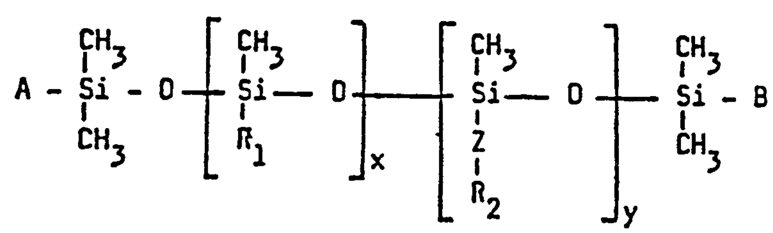

(I)

worin die Symbole die folgenden Bedeutungen haben:

$R_1$ = Alkylgruppe mit 1 bis 30 C-Atomen, wobei bis zu 20 Gew.-% dieser Alkylgruppen ersetzt sein können durch Phenyl- und/oder Phenyl-Alkylen-Gruppen, die jeweils durch eine oder mehrere

Methylgruppen substituierte sein können, wobei die Alkylgruppen 2 bis 3 Kohlenstoffatome enthalten können,

A = $-CH_3$ oder $R_2-Z-$,

B = $-CH_3$ oder $R_2-Z$,

$R_2$ = eine mindestens 3

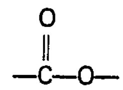

und/oder

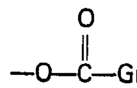
Gruppen

enthaltende aliphatische und/oder cycloaliphatische und/oder aromatische Polyestergruppe ohne Zerewittinoff H-Atome und mit einem mittleren Molekulargewicht von 200 bis 3000,

Z = eine Alkylengruppe mit 1 bis 14 Kohlenstoffatomen, eine Sauerstoffatom, eine Alkylen-Thioether-Gruppe mit 2 bis 14 Kohlenstoffatomen oder eine Alkylen-Amid-Gruppe mit 2 bis 14 Kohlenstoffatomen, wodurch das Siliciumatom mit der Gruppe $R_2$ verbunden wird,

x = 3 bis 250,

y = 0 bis 50,

und wobei das durchschnittliche Molekül mindestens eine Gruppe $R_2-Z-$ enthält und die Zahl der Gruppen $R_2-Z-$ zu der Zahl x 1 : 2 bis 1 : 40 beträgt und daß die Siloxane in einer Menge von mindestens 0,01 Gew.-% und höchstens 5 Gew.-% zugesezt werden.

Die erfindungsgemäß verwendeten polyestermodifizierten Siloxane der vorstehend angegebenen Formel (I) weisen nicht nur eine deutlich höhere thermische Stabilität auf als die bekannten Polysiloxan-Zusätze, wobei ihr thermischer Abbau erste bei Temperaturen ab 210 bis 250°C beginnt, sondern sie ergeben auch eine deutliche Verbesserung der Haftung zwischen den Schichten bei einer Zweischichtlackierung und sie verleihen dem Lack bzw. der Formmasse, dem (der) sie zugesetzt werden, ausgezeichnete Verlaufeigenschaften und eine ausgezeichnete Gleitfähigkeit und Kratzfestigkeit.

Bevorzugte Ausgestaltungen der Erfindung ergeben sich aus den Unteransprüchen 2 bis 15.

Gegenstand der Erfindung ist ferner eine Verfahren zur Förderung des Verlaufs un zur Erhöhung der Gleitfähigkeit von Lacken und Formmassen, das dadurch gekennzeichnet ist, daß den Lacken und Formmassen eine wirksam den Verlauf fördernde und die Gleitfähigkeit erhöhende Menge der polyestermodifizierten Siloxane der vorstehend angegebenen Formel (I) zugestzt wird.

Gegenstand der Erfindung ist ferner die Verwendung der polyestermodifizierten Siloxane der Formel (I) als Zusatzmittel für Lacke und Formmassen zur Förderung des Verlaufs und zur Erhöhung der Gleitfähigkeit derselben.

Lacke im Sinne der Erfindung können die verschiedensten Produkte sein. Es können Klarlacke, pigmentierte oder Farbstoffe enthaltende Lacke sein. Sie können Bindemittel der verschiedensten Art auf Basis physikalisch oder chemisch härtender bzw. trocknender Bindemittel enthalten. Beispiele für physikalisch trocknende Bindemittel sind solche auf Basis von Nitrocellulose, Acrylat-Methacrylat, Chlorkautschuk, PVC-Mischpolymerisaten, Polyvinylestern, Polystyrol, Polystyrolcopolymeren und Copolymeren des Butadiens.

Beispiele für chemisch härtende bzw. trocknende Bindemittel sind lufttrocknende Alkydharze, Alkyd-Melamin-Harze, Acrylat-Melamin-Harze, Acrylat-Isocyanat-Harze (PUR-Harze), Epoxidharze, gesättige und ungesättigte Polyester, Phenol-Formaldehydharze und Harnstoff-Alkydharze.

Als flüssige Phase können diese Lacke organische Lösungsmittel und/oder Wasser oder Weichmacher enthalten, wie dies in abhängig von den Bindemitteln auf diesem Gebiet des Stands der Technik bekannt ist. Die flüssige Phase kann auch in Form von Monomeren oder niedermolekularen Verbindungen vorliegen, die mit den anderen Bindemittelkomponenten unter Bildung der Lacküberzüge reagieren.

Die Lacke gemäß der Erfindung können auch sogenannte Pulverlacke sein, die also keine flüssige Phase enthalten und in Form von Pulvern auf die zu beschichtenden Substrate aufgebracht und dort zum Schmelzen und gegebenenfalls Reagieren gebracht werden. Pulverlacke werden häufig im sogenannten elektrostatischen Auftragsverfahren aufgebracht, vergleiche Platic Technology, Juni 1962, Seite 37 bis 38 "Coating with electrostatic dry spray".

Die Lacke gemäß der Erfindung haben also grundsätzlich die Zusammensetzung wie die bekannten Lacke, die polyestermodifizierten Siloxane als Zusatzstoffe enthalten können, und sie können auch sonst übliche lacktechnische Zusatzstoffe enthalten. Beispiele hierfür sind Netz- und Dispergiermittel, Füllstoffe, Katalysatoren und/oder Beschleuniger für die Härtung, und rheologisch wirksame Mittel.

Die Härtung der Lacke erfolgt entsprechend den in den Lacken enthaltenden Bindemitteln, wie dies dem Fachmann bekannt ist. Besonders vorteilhalft wirken sich die gemäß der Erfindung verwendeten polyestermodifizierten Siloxane aus in hitzehärtbaren Lacken, da die gemäß der Erfindung verwendeten polyestermodifizierten Siloxane sehr temperaturbeständig sind, z.B. unter Einbrennbedingungen bei

Temperaturen bis zu 250°C und bei relativ kurzen Einbrennzeiten sogar bei Temperaturen bis zu etwa 350°C.

Für Formmassen gilt sinngemäß das gleiche, was oben hinsichtlich der Lacke gesagt wurde. Es werden hierunter Massen verstanden, die ·zu Formkörpern verarbeitet werden, wobei die in den Massen enthaltenen Bindemittel, in der Regel bei erhöhter Temperatur, nach und/oder während Formgebung gehärtet werden. Formmassen im Sinne der Erfindung sind insbesonder solche auf Basis von ungesättigten Polyesterharzen, auch in Kombination mit Thermoplasten wie Polystyrol, Polyvinylacetat, Polymethylmethacrylat und Styrol-Butadien-Copolymeren, Epoxidharzen, Polyurethanen, Phenolharzen.

Diese Formmassen können ebenfalls die gemäß dem Stand der Technik üblichen Zusatzstoffe oder sonstigen Bestandteile enthalten, wie sie auch oben hinsichtlich der Lacke bereits erwähnt wurden. Insbesondere können solche Formmassen Füllstoffe und/oder verstärkende Füllstoffe enthalten, wie Glasfasern, Kohlenstoffasern und Polyamidfasern, Wollastonite, Silikate, anorganische Carbonate und Aluminiumhydroxid.

Die Menge der den lacken und Formmassen zugesetzten Siloxane ist, wie gemäß em Stand der Technik, so groß, daß der gewünschte Effekt hinsichtlich einer ausreichenden Förderung des Verlaufs und Erhöhung der Gleitfähigkeit erzeilt wird. Es können sehr geringe Mengen ausreichen, um einen merklichen Effekt zu erzielen, z.B. 0.005 Gew.-%, bezogen auf das Gesamtghewicht der Lacke oder Formmassen. Die Menge an polyestermodifizierten Siloxanen betragt mindestens 0.01 Gew.-%, bevorzugt mindestens 0.05 Gew.-%, bezogen auf das Gesamtgewicht der Lacke oder Formmassen. Die obere Grenze für den Gehalt an Siloxanen wird gegeben durch eine ausreichende Wirkung und dem Wunsch, die Menge möglichst gering zu halten, da die Siloxane relativ hochwertige und teure Produkte sind, so daß aus Preisgründen ein übermäßiger Zusatz in der Regel vermieden wird. Die obere Grenze liegt im allgemeinen bei 5 Gew.-%, bevorzugt bei etwa 2 Gew.-%, und besonders bevorzugt bei etwa 1 Gew.-%, bezogen auf das Gesamtgewicht der Lacke oder Formmassen.

Das Symbol $R_1$ in der Formel I steht für Alkylgruppen mit 1 bis 30 C-Atomen, weil die entsprechenden polyestermodifizierten Siloxane aus leicht zugänglichen Ausgangsstoffen herstellbar sind. Die Auswahl der Alkylgruppen hängt im wesentlichen ab vom gewünschten Verwendungsweck der Siloxane unter Berücksichtigung der Zusammensetzung der Lacke und Formmassen, in denen sie enthalten sind. Siloxane mit langen Alkylgruppen sind wachsartig und besonders geeignet für pulverförmige Lacke und Formmassen. Andererseits sind Siloxane enthaltend niedere Alkylgruppen flüssig oder halbfest und eher geeignet für flüssige Lacke oder Formmassen. Die physikalische Konsistenz der Siloxane wird natürlich auch noch von anderen Parametern der Formel (I) bestimmt, insbesondere der Art der Polyestergruppen. Hierzu wird später noch Stellung genommen. Zweckmäßig sind Alkylgruppen mit bis zu 18, bevorzugt bis zu 12 und besonders bevorzugt bis zu 8 C-Atomen als solche für das Symbol $R_1$, weil diese eine bessere Wirkung hinsichtlich einer Erhöhung der Gleitfähigkeit bewirken als Siloxane, in denen das Symbol $R_1$ für Alkylgruppen mit einer größeren Zahl C-Atomen steht. Aus Gründen der leichten Zugänglichkeit ist die Methylgruppe besonders bevorzugt.

Ein Teil der Alkylgruppen kann ersetzt sein durch Phenyl- und/oder Phenyl-Alkylen gruppen, die jeweils durch eine oder mehrere Methylgruppen substituiert sein können, wobei die Alkylen gruppen 2 oder 3 Kohlenstoffatome enthalten. Zweckmäßig beträgt der Gehalt an derartigen Phenyl- und/oder Phenyl-Alkylengruppen weniger als 10 Gew.-%, bezogen auf das Gesamtgewicht aus Alkylgruppen und Phenyl- und/oder Phenyl-Alkylengruppen, für die das Symbol $R_1$ steht.

Wesentlicher Betandteil der gemäß der Erfindung verwendeten polyestermodifizierten Siloxane sind die Gruppen $R_2$. Dies sind Polyestergruppen, die keine Zerewittinoff H-Atome enthalten. Sie müssen mindestens 3 Gruppen

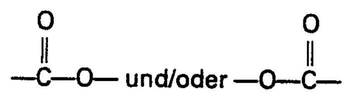
und/oder

enthalten.

Diese Gruppen sind vorzugsweise durch zweiwertige Kohlenwasserstoffgruppen mit 2 bis 12, bevorzugt 4 bis 6 C-Atomen miteinander verbunden. Besonders bevorzugt sind gesättigte aliphatische Kohlenwasserstoffgruppen mit 5 C-Atomen. Die Gruppe $R_2$ ist vorzugsweise eine Polycaprolactongruppe, die also durch Polymerisation von Caprolacton gebildet wird, wie nachfolgend noch im einzelnen erlaütert wird.

Wenn A und B jeweils für eine Gruppe $R_2$—Z— stehen, sit es zweckmäßig, daß y für O steht. Es gilt daß das Verhältnis der Zahl er Gruppen $R_2$—Z— zur Zahl × im Bereich von 1:2 bis 1:40, vorzugsweise 1:3 bis 1:15 liegt.

Wenn A und B jeweils für die Gruppe $CH_3$— stehen, ist y zweckmäßig eine Zahl von 1 bis 50. In diesem Fall ist es wiederum bevorzugt, daß das Verhältnis der Zahl der Gruppen $R_2$—Z— zur Zahl × im Bereich 1:10 bis 1:20 liegt.

Um die erfindungsgemäß verwendeten Polyestergruppen enthaltenden Siloxane herzustellen, iönnen funktionelle Siloxane, wie zie z.B. durch die folgenden Formeln II bis X dargestellt sind, nach den

nachfolgenden beschriebenen Reaktionsmechanismen a) oder b) zur Reaktion gebracht werden (vgl EP—A—0 083 733):

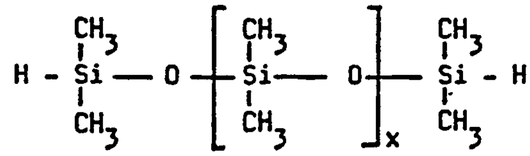

II

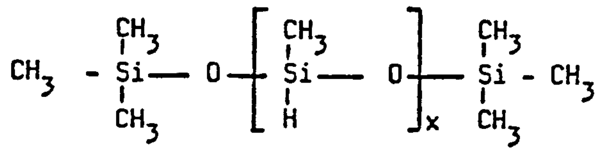

III

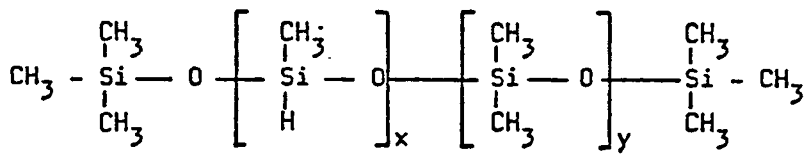

IV

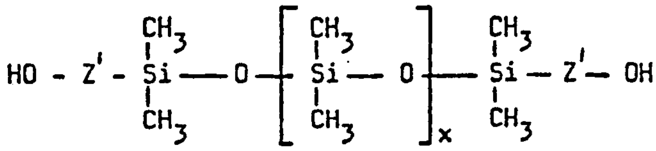

V

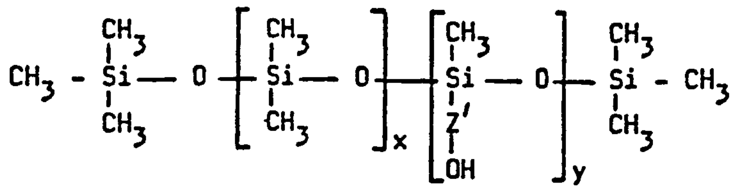

VI

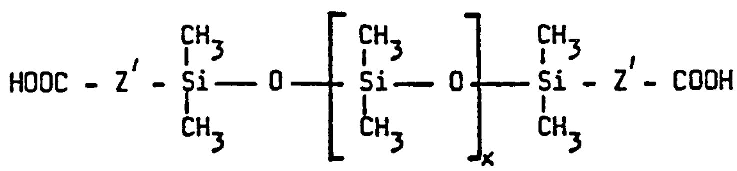

VII

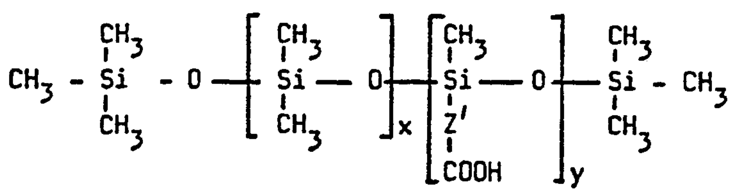

VIII

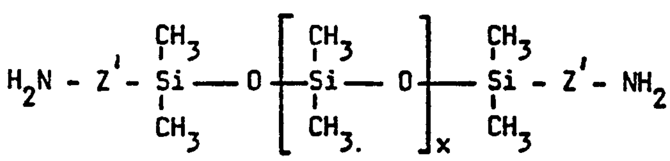

IX

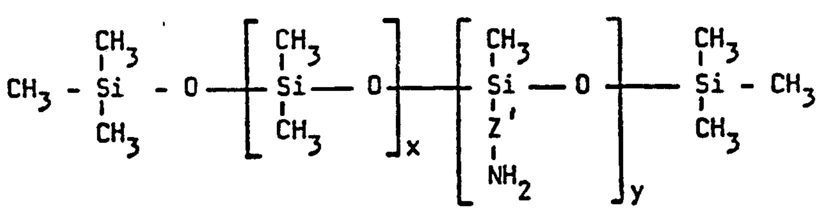

X

worin

x eine Zahl von 3 bis 250,
y eine Zahl von 0 bis 50 und
Z' eine divalente Gruppe, die ein Siliciumatom mit einer Gruppe OH, COOH oder $NH_2$ verbindet, darstellen.

a) Reaktion mit monofunktionellen Polyestern, deren funktionnelle Gruppe zur Reaktion mit den funktionellen Gruppen von Siloxanen, wie sie beispielshaft in den Formelbildern II bis X angegeben sind, befähigt ist, oder

b) weitere Umsetzung an den funktionellen Gruppen eines der Siloxane, wie sie beispielshaft in den Formelbildern II bis X angegeben sind, nach bekannten Verfahren, welche geeignet sind, Polyester zu bilden.

Zu a) Monofunktionnel Polyester, die befähigt sind, mit solchen funktionellen Siloxanen zu reagieren, können —OH, —COOH oder —$CH=CH_2$ funktional sein. Beispiele für OH-funktionelle Polyester sind solche, die z.B. durch Polymerisation eines Lactons, wie Propiolacton, Valerolacton, Caprolacton oder deren substituierte Derivate, mittels einer Monohydroxyverbindung als Startkomponente erhalten werden können. Beispiele für polymerisierbare Lactone können der US—PS 4,360,643 entnommen werden.

Als Startkomponente werden Monoalkohole, zweckmäßig mit 3 bis 30, vorzugsweise 3 bis 10 C-Atomen, wie n-Propanol, n-Butanol, längerkettige, gesättigte Alkohole, Cyclohexanol und Phenylethanol, eingesetzt.

Werden bei der Lactonpolymerisation ungesättigte Alkohole, wie Allylalkohol oder 10-Undecen-1-ol, eingesetzt, und wird die entstehende OH-Endgruppe verschlossen durch z.B. Acylierung, Alkylierung oder Umsetzung mit Monoisocyanaten, erhält man Polyester mit einer ungesättigten Endgruppe.

Die zurvor beschriebene Lactonpolymerisation wird nach bekannten Verfahren, initiiert durch z.B. p-Toluolsulfonsäure oder Dibutylzinndilaurat, bei Temperaturen von etwa 100°C bis 180°C durchgeführt und gehorcht dabei beispielhaft folgenden Mechanismus

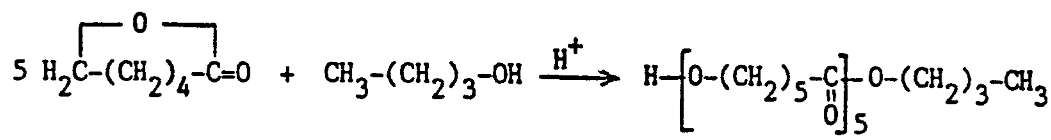


oder aber

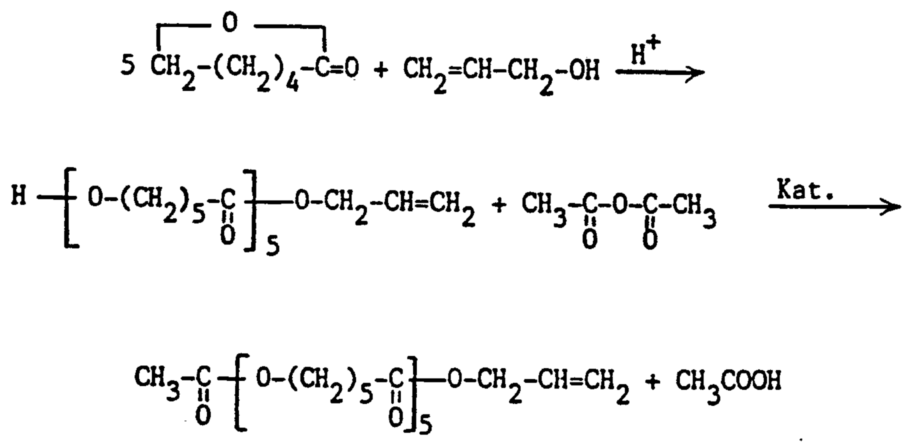


Diese Polyester haben zweickmäßig ein mittleres Molekulargewicht von etwa 200 bis 3000, vorzugsweise 500 bis 2000.

Solche hydroxy- und carboxy-monofunktionellen Polyester sind auch solche, wie sie durch Kondensation eines Diols, z.B. Ethylenglykol, Diethylenglykol, Triethylenglykol, Propylenglykol, Butandiol, Hexandiol, Neopentylglykol, Dodecandiol und Cyclohexandimethanol sowie einer dibasischen Säure, wie Maleinsäure, Bernsteinsäure, Adipinsäure, Sebacinsäure, Phthalsäure, Hexahydrophthalsäure und Tetrahydrophthalsäure, in Anwesenheit von Monohydroxyverbindungen oder Monocarbonsauren erhalten werden können. Die Bildung von Dihydroxypolyestern kann druch Einsatz entsprechend stöchiometrischer Mengen an Monohyroxyverbindungen, wie sie oben beschrieben wurden, zurückgedrängt werden. Gleichermaßen wird die Bildung von dicarboxy-funktionellen Polyestern zurückgedrängt, wenn Monocarbonsäuren in entsprechend stöchiometrischem Verhältnis eingesetzt werden. Die Reaktion läuft beispielhaft nach folgendem Mechanismus ab:

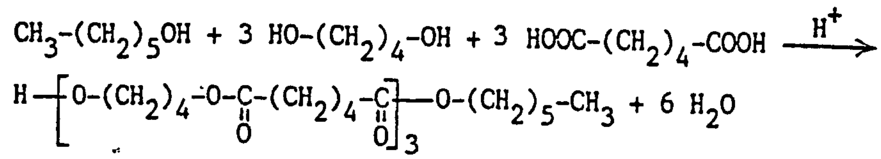


oder aber

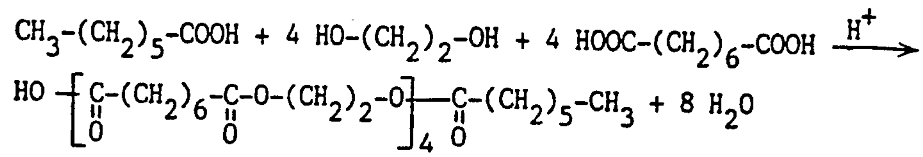


Diese Polyester haben zweckmäßigerweise ein mittleres Molekulargewicht von 200 bis 2000, vorzugsweise 500 bis 1500.

Diese monofunktionellen Polyester werden im Falle einer —OH oder —COOH Funktion mit entsprechenden Siloxanen unter Wasserabspaltung oder $H_2$-Abspaltung kondensierend nach bekannten Verfahren umgesetzt, d.h. z.B. Hyroxypolyester mit carboxyfunktionellen oder SiH-funktionellen Siloxanen oder aber carboxyfunktionelle Polyester mit hydroxyfunktionellen oder aminofunktionellen Siloxanen unter Ausbildung einer Ester- oder Amidbildung.

Im Falle der endständig ungesättigten Polyester werden diese an SiH-funktionelle Siloxane addiert mittels z.B. Pt-Katalysatoren nach bekannten Verfahren. Die Reaktion läuft beispielhaft nach folgendem Mechanismus ab:

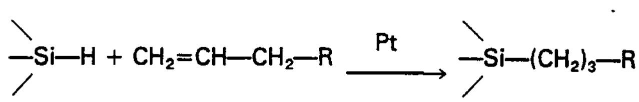


Zu b) Ein Verfahren, das geeignet ist, Polyester zu bilden, ist z.B. die ringöffnende Polymerisation von Lactonen. Hierbei werden hydroxyalkylfunktionelle Polysiloxane mit Lactonen wie Propiolacton, Valerolacton, Caprolacton oder deren substituierte Derivate, direkt umgesetzt zum Polyester, und die OH-Endgruppe wird acyliert, alkyliert, silyliert oder mit Monoisocyanaten umgesetzt.

Die Lactonpolymerisation wird nach bekannten Verfahren initiiert, z.B. durch Dibutylzinndilaurat, und bei Temperaturen von etwa 100 bis 180°C durchgeführt, entweder in geeigneten Lösungsmitteln, wie hochsiedenden Benzinfraktionen, Alkylbenzolen, Estern oder Ketonen oder direkt in der Schmelze.

Die so erhaltenen Reaktionsprodukte enthalten endständig OH-Gruppen, die in den gemäß der Erfindung verwendeten Siloxanen nicht vorliegen dürfen, da diese, wie erwähnt, keine Zerewittinoff H-Atome enthalten dürfen. Es ist deshalb erfolderlich, diese Hydroxylgruppen in Gruppen überzuführen, die keine Zerewittinoff H-Atome enthalten. Dies kann erfolgen druch Acylierung mit z.B. Essigsäureanhydrid, Alkylierung mittels üblicherweise eingesetzten Alkylierungsmitteln, wie Benzylchlorid, oder aber durch Umsetzung zum Urethan mittels Monoisocyanaten, wie Phenylisocyanat, Naphthylisocyanat oder Butylisocyanat, oder aber Silylierung mit z.B. Hexamethyldisilazan. Die Gesamtreaktion läuft beispielhaft nach folgendem Mechanismus ab:

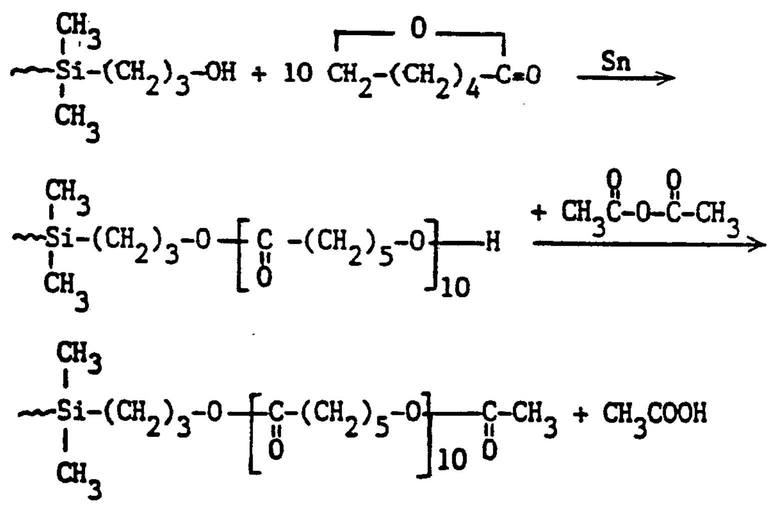


Die nach diesen Verfahren hergestellten Polyester haben zweckmäßig ein Molekulargewicht von etwa 200 bis 3000, vorugsweise 500 bis 3000, wobei durch Caprolactonpolymerisation in der beschriebenen Art

erhaltene Verbindungen bevorzugt sind. Als Starter-Siloxane werden α-ω-Bishyroxyalkylsiloxane bevorzugt.

Andere Verfahren, welche geeignet sind, polyesterhaltige Siloxane zu bilden, sind solche, welche von hydroxy-, carboxy- oder aminofunktionellen Polysiloxanen ausgehen und durch Kondensationsreaktion von Diolen und Dicarbonsäuren in Anwesenheit von Monohydroxy- oder Monocarboxyverbindungen Polyester bilden.

Zur Steuerung des Molekulargewichts sowie, um die Endgruppe zu verschließen, werden die Monohydroxyverbindungen oder Monocarboxyverbindungen im entsprechenden stöchiometrischen Verhältnis eingesetzt. Die Reaktion läuft nach folgendem beispielhaften Mechanismus ab:

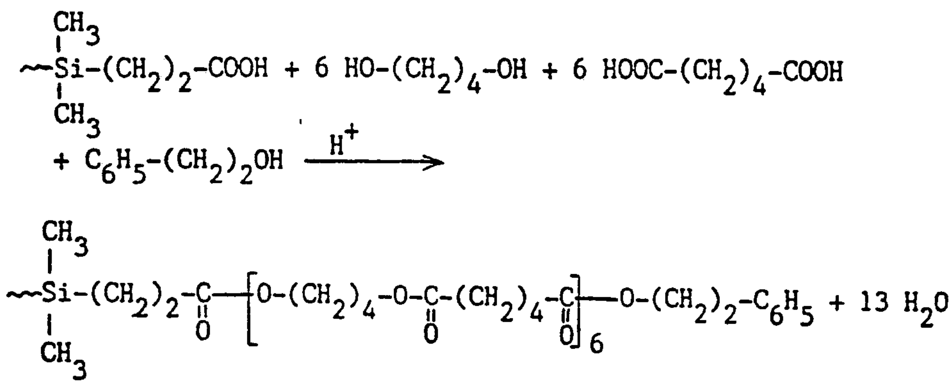


Oder bei Ensatz von aminofunktionellen Siloxanen nach folgendem Mechanismus:

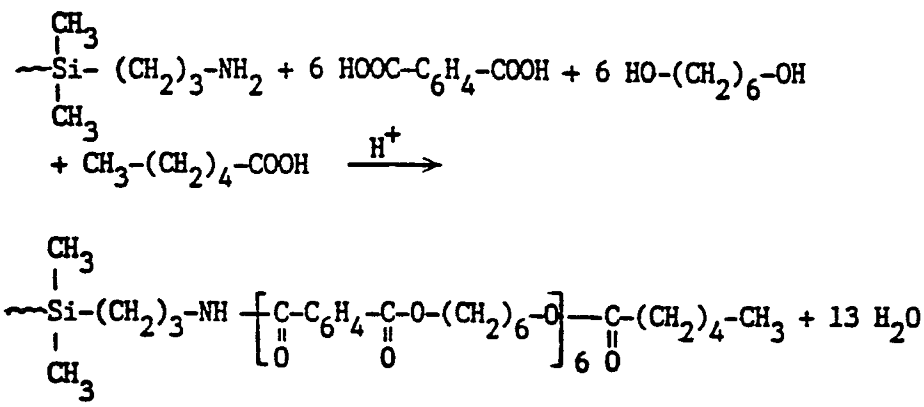


Zweckmäßig haben diese Polyester ein mittleres Molekulargewicht von etwa 200 bis 3000, vorzugsweise von etwa 600 bis 1500.

Durch Variation des Polyesteraufbaues, wie der Auswahl der verwendeten Diole, Dicarbonsäuren oder Lactone sowie der Endgruppen und der Zahl der Estergruppen, kann eine gezielte Verträglichkeit mit den als Bindemittel für die Lacke oder Formmassen eingesetzten Polymeren erreicht werden. Dies spielt besonders bei Bindemitteln unterschiedlicher Polarität eine bedeutende Rolle. Auch setzt man z.B. zweckmäßig für Bindemittel auf Basis Phthalsäurepolyester auch phthalsäurepolyestermodifizierte Siloxane ein. Caprolactonpolyestermodifizierte Siloxane sind besonders bevorzugt, weil sie mit den verschiedensten Polymersystemen verträglich sind.

Aus den obigen Ausführungen ergibt sich, daß als aliphatische, cycloaliphatische und aromatische Polyestergruppen solche eingesetzt werden können, wie sie nach dem Stand der Technik zur Herstellung von Polyestern auf dem Gebiet der Lack- und Formmassen-Industrie üblich und bevorzugt sind. Aliphtische Gruppen enthalten also zweckmäßig 2 bis 12 C-Atome, wobei als Diole aus preislichen Gründen solche mit 2 oder 4 C-Atomen bevorzugt sind, während Dicarbonsaüren zweckmäßig solche mit 2 und 4 C-Atomen in der Alkylenkette sind. Als cycloaliphatische Gruppe ist die Cyclohexan-Gruppe bevorzugt. Als aromatische Gruppe ist die Phenylen-Gruppe bevorzugt.

Die Gruppe Z dient dazu, das Silicium-Atom mit der Polyestergruppe $R_2$ zu verbinden. Die Art dieser divalenten Verbindungsgruppe hängt ab von den Ausgangsprodukten zur Herstellung der gemäß der Erfindung verwendeten Siloxane und der Art der Umsetzung, wie dies in der Siloxan-Chemie bekannt ist (vergl. u.a. US—A—3,960,574, Spalte 1). Geeignete solche zweiwertige Verbindungsgruppen sind Alkylengruppen mit 1 bis 14, bevorzugt mit 1 bis 11 und besonders bevorzugt mit 1 bis 4 Kohlenstoffatomen, deren entsprechende Ausgangsprodukte besonders leicht zugänglich sind. Die

zweiwertige Gruppe kann auch ein Sauerstoffatom sein oder eine Alkylgruppe, die eine Thioether-Bindung (—S—) mit 2 bis 14, bevorzugt 2 bis 11 und besonders bevorzugt 2 bis 4 Kohlenstoffatomen wie beispielsweise eine $—(CH_2)_2—S—CH_2$-Gruppe. Wenn von aminogruppenhaltigen Siloxanen ausgegangen wird, kann die Verbindungsgruppe eine Alkylen-Amid-Gruppe mit 2 bis 14, bevorzugt 2 bis 11 und besonders bevorzugt 2 bis 4 Kohlenstoffatomen, beispielsweise eine $—(CH_2)_3—NH—CO$-Gruppe sein.

Wenn kammartige Siloxane verwendet werden, d.h. solche, in denen y nicht O ist, soll × zweckmäßig unter etwa 200, vorzugsweise unter etwa 150 und besonders bevorzugt unter etwa 100 liegen. Bevorzugt ist × mindestens 20. Bei derartigen kammartigen Siloxanen beträgt das Verhältnis der Zahl der Gruppen $R_2—Z—$ zu der Zahl × vorzugsweise 1:10 bis 1:20.

Wenn y für O steht, handelt es sich um sogenannte lineare Siloxane, da die Polyestergruppen nur and den beiden Enden der Siloxankette vorliegen. In diesem Fall steht x für eine Zahl von 4 bis 100, vorzugsweise 10 bis 60.

Die obige Formel I stellt eine mittlere Durchschnittsformel eines Polymerengemisches dar. Die in der Formel in eckigen Klammern angegebenen Gruppen liegen in statistischer Verteilung im Molekül vor.

Wenn im Sinne der Erfindung gefordert wird, daß die Polyestergruppen keine Zerewittinoff H-Atome enthalten sollen, so wird darunter verstanden, daß im wesentlichen diese Forderungen erfüllt sind. Eine sehr geringe Anzahl an Zerewittinoff H-Atomen stört nicht. In diesem Sinne sollte eine eventuelle OH-Zahl oder Säurezahl unter 3, zweckmäßig unter 2 liegen.

Die folgenden Beispiel erläutern die Erfindung. Aus diesen Beispielen und insbesondere den in den Tabellen angegebenen Werten ergibt sich, daß zwar die Produkte des Stands der Technik in der einen oder anderen Abprüfung den gemäß der Erfindung verwendeten Verbindungen überlegen sein können. Wenn man aber die Eigenschafen insgesamt betrachtet, sind die gemäß der Erfindung verwendeten Verbindungen denjenigen des Stands der Technik überlegen.

## Beispiel 1

In einem Reaktionsgefäß, mit Rührer und Rückflußkühler versehen, wurden 643 g (0.5 Mol) eines Polysiloxans der mittleren Durchschnittsformel

$$HO-(CH_2)_3-Si(CH_3)_2-O-[Si(CH_3)_2-O]_{14}-Si(CH_3)_2-(CH_2)_3-OH$$

mit 571 g (5 Mol) ε-Caprolacton versetzt und nach Zugabe von 100 ppm Dibutylzinndilaurat unter Stickstoff aud 160°C erhitzt. Nach 6 Stunden Reaktionszeit wurde das Produkt auf 60°C abgekühlt und mit 113.4 g (1.1 Mol) Essigsäureanhydrid und 200 ppm 4-Dimethylaminopyridin versetzt und weitere 30 Minuten bei 60°C gerührt. Anschließend wurde durch Anlegen von Vakuum (217 kPa) die entstandene Essigsäure und der verbliebene Überschuß an Essigsäureanhydrid aus dem Reaktionsgut entfernt.

## Beispiel 2

In gleicher Weise, wie im Beispiel 1 beschrieben, wurde unter Verwendung von 467 g (0.5 Mol) eines Polysiloxans der mittleren Durchschnittsformel

$$HO-CH_2-Si(CH_3)_2-O-[Si(CH_3)_2-O]_{10}-Si(CH_3)_2-CH_2-OH$$

und 457 g (4.0 Mol) ε-Caprolacton und anschließender Acetylierung mit 113.4 g (1.1 Mol) Essigsäureanhydrid ein Organopolysiloxan hergestellt.

## Beispiel 3

In gleicher Weise, wie im Beispiel 1 beschrieben, wurde unter Verwendung von 433.3 g (0.25 Mol) eines Polysiloxans der mittleren Durchschnittsformel

$$HO-(CH_2)_3-Si(CH_3)_2-O-[Si(CH_3)_2-O]_{20}-Si(CH_3)_2-(CH_2)_3-OH$$

und 856 g (7.5 Mol) ε-Caprolacton und anschließender Acetylierung mit 61.8 g (0.6 Mol) Essigsäureanhydrid eine Organopolysiloxan hergestellt.

Beispiel 4

In gleicher Weise, wie im Beispiel 1 beschrieben, wurde unter Verwendung von 902 g (0.33 Mol) eines Polysiloxans der mittleren Durchschnittsformel

$$(CH_3)_3-Si-O-\left[\underset{\underset{OH}{|}}{\underset{(CH_2)_3}{\underset{|}{SiCH_3}}}-O\right]_3-\left[Si(CH_3)_2-O\right]_{30}-Si-(CH_3)_3$$

und 685 g (6 Mol) ε-Caprolacton und anschließender Silylierung mit 64.4 g (0.4 Mol) Hexamethyldisilazan hergestellt.

Beispiel 5

507 g (0.5 Mol) eines ungesättigten Polyesters der Formel

$$CH_2=CH-CH_2O-\left[\underset{\underset{O}{\|}}{C}-(CH_2)_5-O\right]_8-\underset{\underset{O}{\|}}{C}-CH_3$$

395 g (0.1 Mol) eines Polysiloxans der mittleren Durchschnittsformel

$$(CH_3)_3-Si-O-\left[Si(CH_3)_2-O\right]_{48}\left[SiHCH_3-O\right]_4-Si(CH_3)_3$$

und 225 g eines Alkylbenzols (Siedebereich 165—185°C) wurden unter Rühren und Durchleiten von Stickstoff mit 1.2 ml $H_2PtCl_6$ 6 $H_2O$ (6%ig in Isopropanol) versetzt und auf 130°C erhitzt und 4 Stunden bei dieser Temperatur gehalten. Nach dieser Zeit zeigte eine, dem Reaktionsgemisch entnommene, Probe im Infrarotspektrum keine Si-H-Bande mehr. Durch Anlegen von Vakuum (217 kPa) wurde das Lösungsmittel bis zu einer Sumpftemperatur von 200°C abgezogen.

Beispiel 6

Entsprechend den Angaben des Beispiels 5 wurden 864 g (1.1 Mol) eines ungesättigten Polyesters der Formel

$$CH_2=CH-CH_2O-\left[\underset{\underset{O}{\|}}{C}-(CH_2)_5-O\right]_6-\underset{\underset{O}{\|}}{C}-CH_3$$

585 g (0.5 Mol) eines Polysiloxans der mittleren Durchschnittsformel

$$H-Si(CH_3)_2-O-\left[Si(CH_3)_2-O\right]_{14}-Si(CH_3)_2H$$

und 362 g Alkylbenzol (Siedebereich 165—185°C) in Gegenwart von Hexachloroplatin(IV)säure umgesetzt.

Beispiel 7

101.3 g (0.1 Mol) eines ungesättigten Polyesters der Formel

$$CH_2=CH-CH_2O-\left[\underset{\underset{O}{\|}}{C}-(CH_2)_5-O\right]_8-\underset{\underset{O}{\|}}{C}-CH_3$$

62.7 g eines Polysiloxans der mittleren Durchschnittsformel

$$(CH_3)_3—Si—O—(SiHCH_3—O)_{60}—Si(CH_3)_3$$

und 41.3 g Xylol wurden unter Rühren (Stickstoffatmosphäre) auf 70°C aufgeheizt und mit 0.15 ml $H_2PtCl_6$ 6

$H_2O$ (6%ig in Isopropanol) versetzt. Nach Erhöhung der Temperatur auf 120°C und 1 Stunde Reaktionszeit wurde dem Reaktionsgemisch eine Probe entnommen und durch gasvolumetrische

$$-\overset{|}{\underset{|}{Si}}H\text{-Bestimmung}$$

der Umsatz an

$$-\overset{|}{\underset{|}{Si}}-H \text{ bestimmt.}$$

Anschließend wurde innerhalb 10 Minuten zunächst 10.4 g (0.1 Mol) Styrol und nach 15 Minuten Nachreaktion 112 g (1 Mol) n-Octen-1 zugegeben. Eine, 30 Minuten nach Ende der Zugabe von n-Octen-1 gezogene, Probe zeigte im Infrarotspektrum keine Si—H—Banden mehr.

Das Xylol und das überschüssige n-Octen-1 wurden im Vakuum (2,7 kPa) bis zu einer Sumpftemperatur von 180°C abdestilliert.

Beispiel 8

Entsprechend den Angaben des Beispiels 7 wurden 93.1 g (0.075 Mol) eines ungesättigten Polyesters der Formel

$$CH_2=CH-CH_2O-\left[\underset{\overset{\|}{O}}{C}-(CH_2)_5-O\right]_{10}-\underset{\overset{\|}{O}}{C}-CH_3$$

84.2 g (1.0 Mol) n-Hexen und 62.7 g eines Polysiloxans der mittleren Durchschnittsformel

$$(CH_3)_3-Si-O-\left[SiHCH_3-O\right]_{60}-Si(CH_3)_3$$

in Gegenwart von Hexachloroplatinsäure umgesetzt.

Beispiel 9

In einem Reaktionsgefäß, mit Rührer und Wasserabscheider versehen, wurden 791 g (0.5 Mol) eines Polysiloxans der mittleren Durchschnittsformel

$$HO-(CH_2)_3-Si(CH_3)_2-O-\left[Si(CH_3)_2-O\right]_{18}-Si(CH_3)_2-(CH_2)_3-OH$$

mit 438.4 g (3 Mol) Adipinsäure, 180.2 g (2 Mol) Butandiol-1,4 und 300 g Xylol versetzt und nach Zugabe von 3 g p-Toluolsulfonsäure auf ca. 140°C erhitzt. Nach 4 Stunden Reaktionszeit (Wasserausbeute 91 g, theoretische Wasserausbeute 90 g) wurden 190 g (1.2 Mol) Decanol zugegeben. Nach weiteren 3 Stunden Reaktionszeit bei ca. 140°C wies das resultierende Produkt eine Säurezahl von 0.7 auf. Nach Anlegen von Vakuum (2,7 kPa) wurden Xylol und das überschüssige Decanol-1 bis zu einer Sumpftemperatur von 200°C abdestilliert.

Beispiel 10

Analog dem Beispiel 9 wurden 495 g (0.5 Mol) eines Polysiloxans der mittleren Durchschnittsformel

$$HO-(CH_2)_3-Si(CH_3)_2-O\left[Si(CH_3)_2-O\right]_{10}-Si\ (CH_3)_2-(CH_2)_3-OH$$

mit 296 g (2 Mol) Phthalsäureanhydrid, 104 g (1 Mol) Pentandiol-1,5 und 122 g (1.2 Mol) Hexanol-1 zu einem Organopolysiloxan umgesetzt.

Beispiel 11

Analog dem Beispiel 9 wurden 499 g (0.25 Mol) eines Polysiloxans der mittleren Durchschnittsformel

$$HOOC-CH_2S-(CH_2)_2-Si(CH_3)_2-O-\left[Si(CH_3)_2-O\right]_{22}-Si(CH_3)_2(CH_2)_2SCH_2COOH$$

mit 225 g (2.5 Mol) Butandiol-1,4, 292 g (2 Mol) Adipinsäure und 70 g (0.6 Mol) Hexansäure zu einem Organopolysiloxan umgesetzt.

Beispiel 12

In einem Reaktionsgefäß, mit Rührer und Rückflußkühler versehen, wurden 642 g (0.5 Mol) eines Polysiloxanes der mittleren Durchschnittsformel

$$HO-(CH_2)_3-Si(CH_3)_2-O\left[Si(CH_3)_2-O\right]_{14}-Si(CH_3)_2(CH_2)_3-OH$$

mit 685 g (6 Mol) ε-Caprolacton versetzt und nach Zugabe von 100 ppm Dibutylzinndilaurat unter Stickstoff auf 160°C erhitzt. Nach 5 Stunden Reaktionszeit wurde das Produkt auf 50°C abgekühlt, das Reaktionsgefäß mit einem Liebigkühler versehen und 1300 g Toluol und 37.8 g (0.7 Mol) Natriummethylat wurden zugegeben und Methanol aus dem Reaktionsgemisch per Destillation entfernt. Anschliesend wurde der Liebigkühler gegen einen Rückflußkühler ausgetauscht, welcher mit Kühlflüssigkeit von −40°C gespeist wurde. Mittels Gaseinleitungsrohr wurden 42.9 g (0.85 Mol) Methylchlorid bei 100°C innerhalb 30 Minuten durch das Reaktionsgemisch geleitet und 5 Stunden bei 100°C gehalten.

Anschließend wurde soviel konzentrierte wäßrige HCl zugesetzt, bis das Reaktionsgemisch sauer reagierte. Nach Neutralisation mit Natriumbicarbonat wurde das Produkt filtriert und das Filtrat bis zu einer Sumpftemperatur von 150°C im Vakuum (3,3 kPa) von den flüchtigen Bestandteilen befreit.

Beispiel 13

60.7 g (0.05 Mol) eines hydroxyfunktionellen Polyesters der Formel

$$CH_3-(CH_2)_3-O-\left[\underset{\underset{O}{\|}}{C}-(CH_2)_5-O\right]_{10}-H$$

62.7 g eines Polysiloxans der mittleren Durchschnittsformel

$$(CH_3)_3-Si-O-\left[SiHCH_3-O\right]_{60}-Si(CH_3)_3$$

und 120 g Xylol wurden unter Rühren (Stickstoffatmosphäre) nach Zugabe von 100 ppm Zinkacetylacetonat auf ca. 125°C aufgeheizt. Nach 2 Stunden Reaktionszeit wurde dem Reaktionsgemisch eine Probe entnommen und durch gasvolumetrische

$$\overset{|}{\underset{|}{-Si-}}H\text{-Bestimmung}$$

der Umstaz an

$$\overset{|}{\underset{|}{-Si-}}H\text{ bestimmt.}$$

Anschließend wurde innerhalb einer Stunde 92.6 g (1.1 Mol) Hexen-1 nach Zugabe von 80 ppm $H_2PtCl_6 \cdot 6H_2O$ (6%ig in Isopropanol) bei 75°C zugegeben. Eine, 30 Minuten nach Ende der Zugabe von Hexen-1 gezogene Probe, zeigte im Infrarotspektrum keine Si—H-Banden mehr.

Das Xylol und das überschüssige n-Hexen-1 wurden im Vakuum (2,7 kPa) bis zu einer Sumpftemperatur von 180°C abdestilliert.

Beispiel 14

In einem Reaktionsgefäß, mit Rührer und Wasserabscheider versehen, wurden 716 g (0.5 Mol) eines Polysiloxans der mittleren Durchschnittsformel

$$H_2N(CH_2)_3Si(CH_3)_2-O\left[Si(CH_3)_2-O\right]_{16}-Si(CH_3)_2(CH_2)_3NH_2$$

mit 146 g (1 Mol) Adipinsäure und unter Überleiten von Stickstoff au 160°C aufgeheizt. Nach Abscheiden von ca. 18 g (1 Mol) Wasser und Abkühlen auf 95°C wurden 208 g (2 Mol) Pentandiol-1,5 und 292 g (2 Mol) Adipinsäure zugesetzt und wieder auf 160°C aufgeheizt. Nach 3 Stunden Reaktionszeit hatten sich ca. 72 g Wasser (4 Mol) abgeschieden und das Reaktionsgemisch wurde mit 190 g (1.2 Mol) Decanol-1 versetzt. Nach weiteren 3 Stunden Reaktionszeit bei 160°C wies das resultierende Produkt eine Säurezahl von 1.1 auf.

Nach Anlegen von Vakuum (2,7 kPa) wurde das überschüssige Decanol bis zu einer Sumpftemperatur von 200°C abdestilliert.

Die in den Beispielen 1 bis 14 aufgeführten, polyestermodifizierten Polysiloxane wurden in den nachfolgend aufgeführten 4 praxisgerechten Lacksystemen 1 bis 4 geprüft, wobei festgestellt wurde, daß bereits Zusätze von 0.01% bis 1%, vorzugsweise 0.10%, dieser Polysiloxane den gewünschten Effekt zeigen.

Vergleichend hierzu wurden 3 handelsübliche Siloxanpolymere 1, 2 und 3 geprüft (siehe Tabelle 1 bis 4).

Polysiloxan 1 = Polyoxyalkylenpolysiloxancopolymer = Baysilon OL®
Polysiloxan 2 = Polymethylphenylsiloxan = Baysilon PL®
Polysiloxan 3 = niedermolekulares Polydimethylsiloxan = Baysilon M50®

Als Prüfkriterien wurden die Reduzierung des Gleitwiderstandes, der Verlauf der lackoberfläche, die Untergrundbenetzung, die Bindemittelverträglichkeit, das Schaumverhalten und die zwischenhaftung bei unterschiedlichen Einbrenntemperaturen geprüft.

Für die Messung des Gleitwiderstandes wurde eine exakte Meßmethode angewandt, welche die, früher oft angewandte "Fingernagelprobe" oder die Messung des Abgleitwinkels von zylindrischen Körpern auf der Beschichtung, ablöst und im folgenden beschrieben ist.

Verwendet wurde ein elektrisches Filmaufziehgerät mit konstantem Vorschub. Auf der Halterung für das Filmziehlineal wurde ein Zugdruck-Kraftaufnehmer befestigt, der über einem Meßverstärker auf einen Schreiber jeden Widerstand aufzeichnet, der dem Gleitkörper entgegensteht. Der Gleitkörper wird in Zug- oder Druckrichtung über die zu messende Oberfläche bewegt.

Als Gleitkörper wurden Gewichtssteine oder mit Stahlkugeln gefüllte Hohlzylinder verwendet, die auf der Gleitfläche mit einer definierten Filzunterlage versehen sind.

Durchführung der Messungen:

Nach Konzipierung dieser Meßapparatur werden an einer definierten Oberfläche — schwarze matte Kunststoffplatten, wie sie für den Scheuertest für Dispersionsfarben Verwendung finden — Messungen mit variiertem Gleitkörpergewicht und abgestuften Geschwindigkeiten durchgeführt. Bei der Prüfung der verschiedenen Zusatzstoffe wurden Glasplatten als Träger der Lackfilme verwendet.

Meßergebnisse

Bei den vergleichenden Messungen wurde festgestellt, daß der Gleitwiderstand proportional zum Gewicht des Gleitkörpers zunimmt. Außerdem zeigte sich, daß die Geschwindigkeit, mit der der Meßkörper über die Oberfläche bewegt wird, selbst bei Erhöhung auf das 4-fache, keinen meßbaren Einfluß auf das Ergebnis hat.

Es resultiert bei Eintragungen der Meßpunkte im Diagramm eine Gerade, die aus dem Nullpunkt kommt. Bei wiederholt durchgeführten Messungen an verschiedenen Oberflächen ergibt sich immer der gleiche Kurvenverlauf. Der Winkel der Kurve richtet sich nach den Gleiteigenschaften der Oberfläche. Damit ist bewiesen, daß die Meßmethode zu sicheren reproduzierbaren Ergebnissen führt. Für die Praxis bedeutet das eine exakte und schnelle Messung der Gleiteigenschaften mit objektiven Zahlenwerten. Der Gleitwiderstand wird in Newton (N) angegeben.

Bei der Prüfung des Verlaufs wurde visuell gewertet, wobei besonderes Augenmerk auf die sogenannte "Orangenschalenstruktur" gerichtet wurde. Eine starke "Orangenschalenstruktur" wurde als negativ bewertet, eine glatte homogene kraterfreie Oberfläche als positiv.

Die Benetzung wurde visuell erfaßt und als positiv bewertet, wenn eine vollständige Substratbenetzung stattgefunden hatte. Negativ wurde bewertet, wenn teilweise ein Zurückziehen des nassen Lackfilms vom Substrat erfolgte und somit keine homogene Oberfläche entstanden ist.

Die Prüfung der Bindemittelverträglichkeit erfolgte visuell, anhand von 50 µm dicken Klarlackschichten (Lacksysteme 1 bis 4, ohne Pigmentierung) aufgezogen auf Glasplatten.

Die Bewertung des Schaumverhaltens erfolgte in den Lacksystemen 1, 2 und 4 durch visuelle Auswertung von Lackaufgüssen auf Aluminiumblechen, wobei 100 g Lack 60 Sekunden bei 2000 Upm mittels Dissolver aufgeschäumt, und auf 45° geneigte Aluminiumbleche gegossen wurde.

Die Bewertung des Schaumverhaltens in Coil coating-Systemen (Lacksystem 3) ist ebenfalls ein wesentliches Prüfkriterium, da bei den hohen Auftragsgeschwindigkeiten mittels schnell laufender Walzen eine sehr starke Lufteinarbeitung in den Lack erfolgt. Diese Luftblasen sind im fertigen, ausgehärteten Lackfilm später als Nadelstiche und Fehlstellen zu erkennen. Positiv wurde bewertet, wenn keine solche Fehlstellen auf der geprüften Lackoberfläche zu erkennen waren.

Die Prüfung der Zwischenhaftung wurde mittels Gitterschnitt auf 568 mm × 97 mm × 0.8 mm starken Stahlblechen durchgeführt, deren erste 40 µm starke Lackschicht in einem Gradientenofen eingebrannt wurde. Der Gradientenofen ist ein Prüfgerät zur Bestimmung der Einbrenn- und Trocknungsvorgänge von Lacken, Harzen, Kunststoffen, Pulverbeschichtungen usw. Das Einbrennen erfolgt auf einer Heizbank, deren Temperaturbereich gewählt werden kann.

Dabei wird auf einem einzigen Blech bei konstanter Einbrennzeit mit unterchiedlicher Temperatur eingebrannt.

Die zweite 40 um starke Lackschicht wurde mittels Umluftofen, mit der je nach Lacksystem üblichen Einbrenntemperatur, ausgehärtet.

1. 2-Komponenten Autoreparaturlack

| | |
|---|---|
| Hydroxyacrylatbindemittel (Macrynal® SM 510 N) 60%ig | 44.28 Gew.% |
| Dibutylzinndilaurat | 0.19 Gew.% |
| Diethylethanolamin | 0.26 Gew.% |
| Butylacetat | 4.49 Gew.% |
| Xylol | 4.49 Gew.% |
| Ethylglykolacetat | 3.49 Gew.% |
| Aromatischer Kohlenwasserstoff, Siedebereich 165—185°C | 3.90 Gew.% |
| $ZiO_2$ | 23.17 Gew.% |
| Härter (Desmodur® N) | 15.83 Gew.% |

2. Acryl/Melamin-Lack

| | |
|---|---|
| Acrylharz 50%ig (Synthacryl® SC 303) | 43.4 Gew.% |
| Melaminharz (Setamine® US 133) | 15.5 Gew.% |
| Pigment (Sicominrot® L 3030 S) | 25.0 Gew.% |
| Bentonepaste 10%ig | 2.5 Gew.% |
| Xylol | 4.6 Gew.% |
| Aromatischer Kohlenwasserstoff, Siedebereich 165—185°C | 6.0 Gew.% |
| Aromatischer Kohlenwasserstoff, Siedebereich 186—215°C | 3.0 Gew.% |

3. Coil Coating Lack

| | |
|---|---|
| Ölfreier Polyester (Uralac® 107—RA 8) | 44.55 Gew.% |
| $TiO_2$ (RN 59) | 20.35 Gew.% |
| Melaminharz (Cymel® 301) | 4.70 Gew.% |
| p-Toluolsulfonsäure, 40%ig in Ethylglykolacetat | 0.25 Gew.% |
| Verdünnung | 30.15 Gew.% |

4. Acrylatharzlack (selbstvernetzend)

| | |
|---|---|
| Acrylatharz (Larodor® 150 BX) | 51.03 Gew.% |
| $TiO_2$ (R—KB 2) | 29.63 Gew.% |
| Bentonepaste, 10%ig | 1.70 Gew.% |
| Xylol | 13.72 Gew.% |
| n-Butanol | 3.92 Gew.% |

Bewertung:

Zwischenhaftung
1 = gute Haftung, kein Abplatzen
2 = leichtes Abplatzen
3 = mittleres Abplatzen
4 = keine Haftung

Verlauf/Benetzung
1 = sehr guter Verlauf/Benetzung
2 = guter Verlauf/Benetzung
3 = schlechter Verlauf/Benetzung

Trübung im Lackfilm
1 = keine Trübung
2 = sehr leichte Trübung
3 = leichte Trübung
4 = starke Trübung

Schaum
1 = entschäumend
2 = wie O-Probe (indifferent)
3 = schaumstabilisierend

Tabelle 2 - Acryl/Melamin Lack

| Produkt | Einsatzmenge. Wirksubstanz (%) | Gleitwiderstand (N) | Verlauf | Trübung | Schaum | Zwischenhaftung (°C) 130 | 150 | 170 | 190 |
|---|---|---|---|---|---|---|---|---|---|
| 0-Probe | - | 2,94 | 3 | 1 | 2 | 1 | 1 | 2 | 3 |
| Polysiloxan 1 | 0,1 | 1,18 | 1 | 1 | 3 | 1 | 2 | 3 | 4 |
| Polysiloxan 2 | 0,1 | 2,90 | 1 | 2 | 2 | 1 | 1 | 2 | 2 |
| Polysiloxan 3 | 0,1 | 1,62 | 1-2 | 4 | 1 | 1 | 2 | 3 | 3 |
| Beispiel 1 | 0,1 | 0,83 | 1 | 1 | 2 | 1 | 1 | 1 | 1 |
| Beispiel 2 | 0,1 | 0,87 | 1 | 1 | 2 | 1 | 1 | 1 | 2 |
| Beispiel 3 | 0,1 | 0,92 | 1 | 1 | 2 | 1 | 1 | 1 | 2 |
| Beispiel 4 | 0,1 | 0,75 | 1 | 1 | 2 | 1 | 1 | 1 | 1 |
| Beispiel 5 | 0,1 | 0,97 | 1 | 1 | 2 | 1 | 1 | 1 | 2 |
| Beispiel 6 | 0,1 | 0,91 | 1 | 1 | 2 | 1 | 1 | 1 | 2 |
| Beispiel 7 | 0,1 | 0,98 | 1 | 2 | 1 | 1 | 1 | 2 | 3 |
| Beispiel 8 | 0,1 | 0,96 | 1 | 2 | 1 | 1 | 1 | 2 | 3 |
| Beispiel 9 | 0,1 | 0,89 | 1 | 1 | 2 | 1 | 1 | 1 | 1 |
| Beispiel 10 | 0,1 | 0,84 | 1 | 1 | 2 | 1 | 1 | 1 | 2 |
| Beispiel 11 | 0,1 | 0,80 | 1 | 1 | 2 | 1 | 1 | 1 | 2 |
| Beispiel 12 | 0,1 | 0,95 | 1 | 1 | 2 | 1 | 1 | 1 | 1 |
| Beispiel 13 | 0,1 | 1,05 | 1 | 2 | 1 | 1 | 2 | 2 | 3 |
| Beispiel 14 | 0,1 | 0,93 | 1 | 1-2 | 1 | 1 | 1 | 2 | 2 |

Tabelle 1 - Prüfung 2-Komponenten Autoreparaturlack

| Produkt | Einsatzmenge Wirksubstanz (%) | Gleitwiderstand (N) | Verlauf | Trübung | Schaum | Zwischenhaftung (°C) | | | |
|---|---|---|---|---|---|---|---|---|---|
| | | | | | | 60 | 80 | 100 | 120 |
| O-Probe | - | 3,14 | 3 | 1 | 2 | 1 | 1 | 1 | 2 |
| Polysiloxan 1 | 0,1 | 0,83 | 1-2 | 1 | 3 | 1 | 1 | 2 | 4 |
| Polysiloxan 2 | 0,1 | 3,05 | 1 | 1 | 2 | 1 | 1 | 1 | 2 |
| Polysiloxan 3 | 0,1 | 1,18 | 2 | 3 | 1 | 1 | 1 | 2 | 3 |
| Beispiel 1 | 0,1 | 0,79 | 1 | 1 | 2 | 1 | 1 | 1 | 1 |
| Beispiel 2 | 0,1 | 0,80 | 1 | 1 | 2 | 1 | 1 | 1 | 1 |
| Beispiel 3 | 0,1 | 0,95 | 1 | 1 | 2 | 1 | 1 | 1 | 2 |
| Beispiel 4 | 0,1 | 0,78 | 1-2 | 1 | 2 | 1 | 1 | 1 | 2 |
| Beispiel 5 | 0,1 | 0,84 | 1 | 1 | 2 | 1 | 1 | 1 | 1 |
| Beispiel 6 | 0,1 | 0,89 | 1 | 1 | 2 | 1 | 1 | 1 | 1 |
| Beispiel 7 | 0,1 | 0,98 | 1-2 | 2 | 1 | 1 | 1 | 2 | 2 |
| Beispiel 8 | 0,1 | 0,85 | 1-2 | 2 | 1 | 1 | 1 | 2 | 2 |
| Beispiel 9 | 0,1 | 0,76 | 1 | 1 | 2 | 1 | 1 | 1 | 1 |
| Beispiel 10 | 0,1 | 0,83 | 1 | 1 | 2 | 1 | 1 | 1 | 1 |
| Beispiel 11 | 0,1 | 0,76 | 1 | 1 | 2 | 1 | 1 | 1 | 2 |
| Beispiel 12 | 0,1 | 0,81 | 1-2 | 1 | 2 | 1 | 1 | 1 | 1 |
| Beispiel 13 | 0,1 | 0,90 | 1 | 2 | 1 | 1 | 1 | 2 | 2 |
| Beispiel 14 | 0,1 | 0,92 | 1-2 | 1 | 2 | 1 | 1 | 1 | 2 |

Tabelle 3 - Prüfung Coil Coating Lack

| Produkt | Einsatzmenge Wirksubstanz (%) | Gleitwiderstand (N) | Verlauf | Benetzung | Trübung | Schaum | Zwischenhaftung (°C) 190 | 210 | 230 | 250 |
|---|---|---|---|---|---|---|---|---|---|---|
| 0-Probe | - | 2,80 | 3 | 3 | 1 | 2 | 1 | 1 | 1 | 1 |
| Polysiloxan 1 | 0,1 | 0,81 | 1-2 | 1-2 | 1 | 3 | 2 | 2 | 3 | 4 |
| Polysiloxan 2 | 0,1 | 2,75 | 3 | 3 | 2 | 2 | 1 | 1 | 1 | 2 |
| Polysiloxan 3 | 0,1 | 1,20 | 1-2 | 2-3 | 4 | 1 | 1 | 1 | 2 | 2 |
| Beispiel 1 | 0,1 | 0,49 | 1 | 1 | 1 | 2 | 1 | 1 | 1 | 1 |
| Beispiel 2 | 0,1 | 0,55 | 1 | 1 | 1 | 2 | 1 | 1 | 1 | 1 |
| Beispiel 3 | 0,1 | 0,57 | 1 | 1 | 1 | 2 | 1 | 1 | 1 | 1 |
| Beispiel 4 | 0,1 | 0,63 | 1 | 1 | 1 | 2 | 1 | 1 | 1 | 1 |
| Beispiel 5 | 0,1 | 0,68 | 1 | 1 | 1 | 2 | 1 | 1 | 1 | 1 |
| Beispiel 6 | 0,1 | 0,62 | 1 | 1 | 1 | 2 | 1 | 1 | 1 | 1 |
| Beispiel 7 | 0,1 | 0,70 | 1 | 1-2 | 2 | 1 | 1 | 1 | 2 | 2 |
| Beispiel 8 | 0,1 | 0,73 | 1 | 1-2 | 2 | 1 | 1 | 1 | 2 | 2 |
| Beispiel 9 | 0,1 | 0,70 | 1 | 1 | 1 | 2 | 1 | 1 | 1 | 1 |
| Beispiel 10 | 0,1 | 0,67 | 1 | 1 | 1 | 2 | 1 | 1 | 1 | 1 |
| Beispiel 11 | 0,1 | 0,67 | 1 | 1 | 1 | 2 | 1 | 1 | 1 | 1 |
| Beispiel 12 | 0,1 | 0,71 | 1 | 1 | 1 | 2 | 1 | 1 | 1 | 1 |
| Beispiel 13 | 0,1 | 0,81 | 1 | 1-2 | 2 | 1 | 1 | 1 | 2 | 2 |
| Beispiel 14 | 0,1 | 0,83 | 1 | 1 | 1 | 2 | 1 | 1 | 1 | 1 |

Tabelle 4 - Prüfung Acrylatharzlack

| Produkt | Einsatzmenge Wirksubstanz (%) | Gleitwiderstand (N) | Verlauf | Trübung | Schaum | Zwischenhaftung (°C) 130 | 150 | 170 | 190 |
|---|---|---|---|---|---|---|---|---|---|
| 0-Probe | - | 3,67 | 2 | 1 | 2 | 1 | 1 | 2 | 2 |
| Polysiloxan 1 | 0,1 | 0,78 | 1 | 1 | 3 | 1 | 2 | 4 | 4 |
| Polysiloxan 2 | 0,1 | 3,45 | 2 | 1 | 2 | 1 | 2 | 3 | 3 |
| Polysiloxan 3 | 0,1 | 1,76 | 1 | 4 | 1 | 1 | 3 | 3 | 3 |
| Beispiel 1 | 0,1 | 0,71 | 1 | 1 | 2 | 1 | 1 | 1 | 1 |
| Beispiel 2 | 0,1 | 0,69 | 1 | 1 | 2 | 1 | 1 | 1 | 1-2 |
| Beispiel 3 | 0,1 | 0,70 | 1 | 1 | 2 | 1 | 1 | 1-2 | 1-2 |
| Beispiel 4 | 0,1 | 0,73 | 1 | 1 | 2 | 1 | 1 | 1 | 1 |
| Beispiel 5 | 0,1 | 0,78 | 1 | 1 | 2 | 1 | 1 | 1-2 | 2 |
| Beispiel 6 | 0,1 | 0,70 | 1 | 1 | 2 | 1 | 1 | 1 | 2 |
| Beispiel 7 | 0,1 | 0,88 | 1 | 2 | 1 | 1 | 2 | 2 | 2-3 |
| Beispiel 8 | 0,1 | 0,86 | 1 | 2 | 1 | 1 | 2 | 2 | 2-3 |
| Beispiel 9 | 0,1 | 0,77 | 1 | 1 | 2 | 1 | 1 | 1 | 2 |
| Beispiel 10 | 0,1 | 0,71 | 1 | 1 | 2 | 1 | 1 | 1 | 2 |
| Beispiel 11 | 0,1 | 0,80 | 1 | 1 | 2 | 1 | 1 | 1 | 1-2 |
| Beispiel 12 | 0,1 | 0,76 | 1 | 1 | 2 | 1 | 1 | 1 | 2 |
| Beispiel 13 | 0,1 | 0,76 | 1 | 2 | 1 | 1 | 2 | 2 | 2-3 |
| Beispiel 14 | 0,1 | 0,85 | 1 | 1 | 2 | 1 | 1 | 2 | 2 |

**Patentansprüche**

1. Lacke und Formmassen mit einem den Verlauf fördernden und die Gleitfähigkeit erhöhenden Gehalt an polyestermodifizierten Siloxanen, dadurch gekennziechnet, daß die polyethergruppenfreien, polyestergruppenhaltigen Siloxane folgender Formel entsprechen:

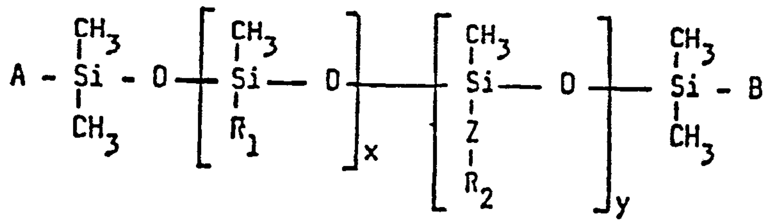
(I)

worin die Symbole die folgenden Bedeutungen haben:

$R_1$ = Alkylgruppe mit 1 bis 30 C-Atomen, wobei bis zu 20 Gew.-% dieser Alkylgruppen ersetzt sein können durch Phenyl- und/oder Phenyl-Alkylen-Gruppen, die jeweils durch eine oder mehrere Methylgruppen substituierte sein können, wobei die Alkylengruppen 2 bis 3 Kohlenstoffatome enthalten können,

A = $—CH_3$ oder $R_2—Z—$,

B = $—CH_3$ oder $R_2—Z—$,

$R_2$ = eine mindestens 3

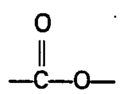

und/oder

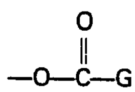Gruppen

enthaltende aliphatische und/oder cycloaliphatische und/oder aromatische Polyestergruppe ohne Zerewittinoff H-Atome und mit einem mittleren Molekulargewicht von 200 bis 3000,

Z = eine Alkylengruppe mit 1 bis 14 Kohlenstoffatomen, ein Sauerstoffatom, eine Alkylen-Thioether-Gruppe mit 2 bis 14 Kohlenstoffatomen oder eine Alkylen-Amid-Gruppe mit 2 bis 14 Kohlenstoffatomen, wodurch das Siliciumatom mit der Gruppe $R_2$ verbinden wird,

x = 3 bis 250,

y = 0 bis 50,

und wobei das durchschnittliche Molekül mindestens eine Gruppe $R_2—Z—$ enthält und die Zahl der Gruppen $R_2—Z—$ zu der Zahl x 1:2 bis 1:40 beträgt und daß die Siloxane in einer Menge von mindestens 0,01 Gew.-% und höchstens 5 Gew.-% zugesetzt werden.

2. Lacke und Formmassen nach Anspruch 1, dadurch gekennzeichnet, daß $R_1$ für Alkylgruppen mit 1 bis 18 C-Atomen steht.

3. Lacke und Formmassen nach Anspruch 1, dadurch gekennzeichnet, daß $R_1$ für Alkylgruppen mit 1 bis 12 C-Atomen steht.

4. Lacke und Formmassen nach Anspruch 1, dadurch gekennzeichnet, daß $R_1$ für Alkylgruppen mit 1 bis 8 C-Atomen steht.

5. Lacke und Formmassen nach Anspruch 1, dadurch gekennzeichnet, daß $R_1$ für Methylgruppen steht.

6. Lacke und Formmassen nach einem oder mehreren der Ansprüche 1 bis 5, dadurch gekennzeichnet, daß in den Gruppen $R_2$ die Gruppen

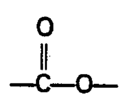 und/oder 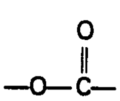

durch zweiwertige Kohlenwasserstoffgruppen mit 2 bis 12 C-Atomen verbunden sind und daß die Gruppen $R_2$ ein mittleres Molekulargewicht von 200 bis 3000 besizten.

7. Lacke und Formmassen nach einem oder mehreren der Ansprüche 1 bis 5, dadurch gekennzeichnet, daß in den Gruppen $R_2$ die Gruppen

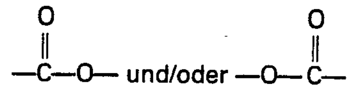

durch zweiwertige Kohlenwasserstoffgruppen mit 4 bis 6 C-Atomen verbunden sind.

8. Lacke und Formmassen nach einem oder mehreren der Ansprüche 1 bis 5, dadurch gekennzeichnet, daß in den Gruppen $R_2$ die Gruppen

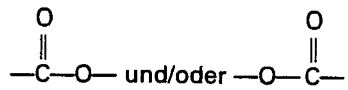

durch gesättigte aliphatische Kohlenwasserstoffgruppen mit 5 C-Atomen verbunden sind.

9. Lacke und Formmassen nach einem oder mehreren der Ansprüche 1 bis 5, dadurch gekennzeichnet, daß $R_2$ eine Polycaprolactongruppe mit einem mittleres Molekulargewicht von 200 bis 3000.

10. Lacke und Formmassen nach einem oder mehreren der Ansprüche 1 bis 9, dadurch gekennzeichnet, daß A und B jeweils für eine Gruppe $R_2$—Z— stehen und y für O steht.

11. Lacke und Formmassen nach Anspruch 10, dadurch gekennzeichnet, daß das Verhältnis der Zahl der Gruppen $R_2$—Z— zur Zahl × im Bereich 1:3 bis 1:40, vorzugsweise im Bereich 1:3 bis 1:15 liegt.

12. Lacke und Formmassen nach einem oder mehreren der Ansprüche 1 bis 9, dadurch gekennzeichnet, daß A und B jeweils für die Gruppe $CH_3$— stehen und y eine Zahl von 1 bis 50 bedeutet.

13. Lacke und Formmassen nach Anspruch 12, dadurch gekennzeichnet, daß das Verhältnis der Zahl der Gruppen $R_2$—Z— zur Zahl × im Bereich 1:10 bis 1:20 liegt.

14. Lacke und Formmassen nach Anspruch 1, dadurch gekennzeichnet, daß Z für eine Alkylengruppe mit 1 bis 11 Kohlenstoffatomen, ein Sauerstoffatom, eine Alkylen-Thioether-Gruppe mit 2 bis 11 Kohlenstoffatomen und eine Alkylen-Amid-Gruppe mit 2 bis 11 Kohlenstoffatomen steht.

15. Lacke und Formmassen nach Anspruch 14, dadurch gekennzeichnet, daß Z für eine Alkylengruppe mit 1 bis 4 Kohlenstoffatomen, ein Sauerstoffatom, eine Alkylen-Thioether-Gruppe mit 2 bis 4 Kohlenstoffatomen und eine Alkylen-Amid-Gruppe mit 2 bis 4 Kohlenstoffatomen steht.

16. Verfahren zur Förderung des Verlaufs und zur Erhöhung der Gleitfähigkeit von Lacken und Formmassen, dadurch gekennzeichnet, daß den Lacken und Formmassen eine wirksam den Verlauf fördernde und die Gleitfähigkeit erhöhende Menge von polyestergruppenhaltigen Siloxanan der Formel I nach Anspruch 1 zugesetzt wird.

17. Verwendung von polyestergruppenhaltigen Siloxane der Formel I nach Anspruch 1 als Zusatzmittel für Lacke und Formmassen.

**Revendications**

1. Vernis et matières à mouler contenant des siloxannes à modification polyester qui améliorent l'étalement et accroissent l'aptitude au glissement, caractérisés en ce que les siloxannes exempts de groupes polyéther et contenant des groupes polyester répondent à la formule

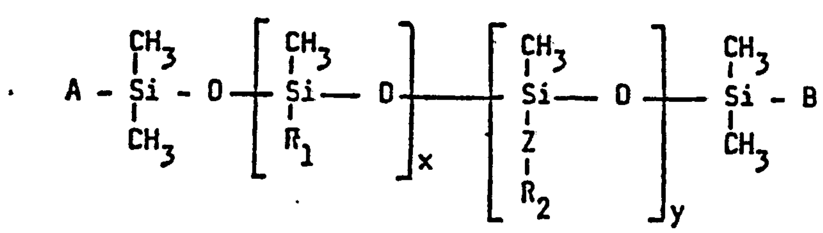
(I)

dans laquelle les symboles ont les significations suivantes:

$R_1$ représente un groupe alkyle en $C_1$—$C_{30}$, une proportion allant jusqu'à 20% en poids de ces groupes alkyle pouvant être remplacée par des groupes phényle et/ou phénylalkylène qui peuvent eux-mêmes être substitués par un ou plusieurs groupes méthyle, les groupes alkylène pouvant contenir 2 à 3 atomes de carbone,

A représente —$CH_3$ ou $R_2$—Z—,

B représente —$CH_3$ ou $R_2$—Z—,

$R_2$ représente un groupe polyester aliphatique et/ou cycloaliphatique et/ou aromatique contenant au moins trois groupes

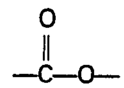

et/ou

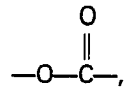

sans atomes d'hydrogène de Zerewitinoff et à un poids moléculaire moyen de 200 à 3000,

Z représente un groupe alkylène contenant 1 à 14 atomes de carbone, un atome d'oxygène, un groupe alkylène-thioéther contenant 2 à 14 atomes de carbone ou un groupe alkylène-amide contenant 2 à 14 atomes de carbone, qui relie l'atome de silicium au groupe $R_2$,

x est un nombre allant de 3 à 250,

y est un nombre allant de 0 à 50,

la molécule moyenne contenant au moins un groupe $R_2$—Z—, le rapport du nombre des groupes $R_2$—Z— au nombre x étant de 1:2 à 1:40 et les siloxannes étant ajoutés en quantité d'au moins 0,01% en poids et de 5% en poids au maximum.

2. Vernis et matières à mouler selon la revendication 1, caractérisés en ce que les symboles $R_1$ représentent des groupes alkyle en $C_1$—$C_{18}$.

3. Vernis et matières à mouler selon la revendication 1, caractérisés en ce que les symboles $R_1$ représentent des groupes alkyle en $C_1$—$C_{12}$.

4. Vernis et matières à mouler selon la revendication 1, caractérisés en ce que les symboles $R_1$ représentent des groupes alkyle en $C_1$—$C_8$.

5. Vernis et matières à mouler selon la revendication 1, caractérisés en ce que les symboles $R_1$ représentent des groupes méthyle.

6. Vernis et matières à mouler selon l'une ou plusieurs des revendications 1 à 5, caractérisés en ce que, dans les groupes $R_2$, les groupes

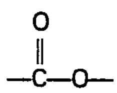 et/ou 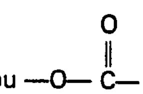

sont reliés par des groupes hydrocarbonés divalents en $C_2$—$C_{12}$ et en ce que les groupes $R_2$ ont un poids moléculaire moyen de 200 à 3000.

7. Vernis et matières à mouler selon l'une ou plusieurs des revendications 1 à 5, caractérisés en ce que, dans les groupes $R_2$, les groupes

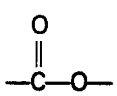 et/ou 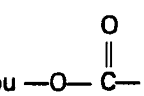

sont reliés par des groupes hydrocarbonés divalents en $C_4$—$C_6$.

8. Vernis et matières à mouler selon l'une ou plusieurs des revendications 1 à 5, caractérisés en ce que, dans les groupes $R_2$, les groupes

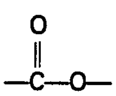 et/ou 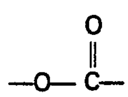

sont reliés par des groupes hydrocarbonés aliphatiques saturés en $C_5$.

9. Vernis et matières à mouler selon l'une ou plusieurs des revendications 1 à 5, caractérisés en ce que $R_2$ représente un groupe polycaprolactone à un poids moléculaire moyen de 200 à 3000.

10. Vernis et matières à mouler selon l'une ou plusieurs des revendications 1 à 9, caractérisés en ce que A et B représentent chacun un groupe $R_2$—Z— et y est égale à 0.

11. Vernis et matières à mouler selon la revendication 10, caractérisés en ce que le rapport du nombre des groupes $R_2$—Z— au nombre x se situe dans l'intervalle de 1:3 à 1:40, de préférence de 1:3 à 1:15.

12. Vernis et matières à mouler selon l'une ou plusieurs des revendications 1 à 9, caractérisés en ce que A et B représentent chacun un groupe $CH_3$— et y est un nombre allant de 1 à 50.

13. Vernis et matières à mouler selon la revendication 12, caractérisés en ce que le rapport du nombre des groupes $R_2$—Z— au nombre x se situe dans l'intervalle de 1:10 à 1:20.

14. Vernis et matières à mouler selon la revendication 1, caractérisés en ce que Z représente un groupe alkylène en $C_1$—$C_{11}$, un atome d'oxygène, un groupe alkylène-thioéther en $C_2$—$C_{11}$ ou un groupe alkylène-amide en $C_2$—$C_{11}$.

15. Vernis et matières à mouler selon la revendication 14, caractérisés en ce que Z représente un groupe alkylène en $C_1$—$C_4$, un atome d'oxygène, un groupe alkylène-thioéther en $C_2$—$C_4$ ou un groupe alkylène-amide en $C_2$—$C_4$.

16. Procédé pour améliorer l'étalement et accroître l'aptitude au glissement de vernis et matières à mouler, caractérisé en ce que l'on ajoute aux vernis et matières à mouler des siloxannes contenant des groupes polyester, de formule I selon la revendication 1, en quantité efficace pour améliorer l'étalement et accroître l'aptitude au glissement.

17. Utilisation des siloxannes contenant des groupes polyester, de formule I selon la revendication 1, en tant qu'additifs à des vernis et matières à mouler.

## Claims

1. Coatings and moulding materials with a flow-improving and slip-increasing content of polyester-modified siloxanes, characterized in that the polyether-group-free, polyester-group-containing siloxanes correspond to the following formula:

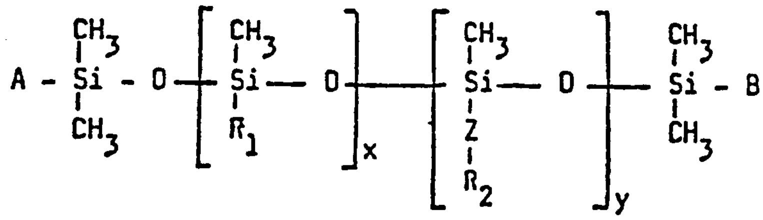

(I)

in which the symbols have the following meanings:

$R_1$ = alkyl group with 1 to 30 C atoms, up to 20% by weight of these alkyl groups being replaceable by phenyl and/or phenylalkylene groups, each of which can be substituted with one or more methyl groups while the alkylene groups can contain 2 to 3 carbon atoms,

A = —$CH_3$ or $R_2$—Z—,

B = —$CH_3$ or $R_2$—Z—,

$R_2$ = an aliphatic and/or cycloaliphatic and/or aromatic polyester group, containing at least 3

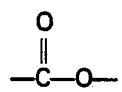

and/or

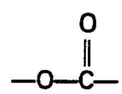 groups,

without Zerewitinoff H atoms and with an average molecular weight of 200 to 3000,

Z = an alkylene group with 1 to 14 carbon atoms, an oxygen atom, an alkylenethioether group with 2 to 14 carbon atoms or an alkyleneamide group with 2 to 14 carbon atoms, by which the silicon atom is linked to the groupe $R_2$,

x = 3 to 250,

y = 0 to 50,

and in which the average molecule contains at least one $R_2$—Z— group and the ratio of the number of $R_2$—Z— groups to the number x is 1:2 to 1:40 and that the siloxanes are added in an amount of at least 0.01% by weight and not more than 5% by weight.

2. Coatings and moulding materials according to Claim 1, characterized in that $R_1$ stands for alkyl groups with 1 to 18 C atoms.

3. Coatings and moulding materials according to Claim 1, characterized in that $R_1$ stands for alkyl groups with 1 to 12 C atoms.

4. Coatings and moulding materials according to Claim 1, characterized in that $R_1$ stands for alkyl groups with 1 to 8 C atoms.

5. Coatings and moulding materials according to Claim 1, characterized in that $R_1$ stands for methyl groups.

6. Coatings and moulding materials according to one or more of Claims 1 to 5, characterized in that in the groups $R_2$ the groups

$$-\overset{O}{\overset{\|}{C}}-O- \text{ and/or } -O-\overset{O}{\overset{\|}{C}}-$$

are linked by divalent hydrocarbon groups with 2 to 12 carbon atoms and that the groups $R_2$ have an average molecular weight of 200 to 3000.

7. Coatings and moulding materials according to one or more of Claims 1 to 5, characterized in that in the groups $R_2$ the groups

$$-\overset{O}{\overset{\|}{C}}-O- \text{ and/or } -O-\overset{O}{\overset{\|}{C}}-$$

are linked by divalent hydrocarbon groups with 4 to 6 carbon atoms.

8. Coatings and moulding materials according to one or more of Claims 1 to 5, characterized in that in the groups $R_2$ the groups

$$-\overset{O}{\overset{\|}{C}}-O- \text{ and/or } -O-\overset{O}{\overset{\|}{C}}-$$

are linked by saturated aliphatic hydrocarbon groups with 5 C atoms.

9. Coatings and moulding materials according to one or more of Claims 1 to 5, characterized in that $R_2$ is a polycaprolactone group with an average molecular weight of 200 to 3000.

10. Coatings and moulding materials according to one or more of Claims 1 to 9, characterized in that A and B each stands for a group $R_2$—Z— and y for O.

11. Coatings and moulding materials according to Claim 10, characterized in that the ratio of the number of groups $R_2$—Z— to the number x is in the range 1:3 to 1:40, preferably in the range 1:3 to 1:15.

12. Coatings and moulding materials according to one or more of Claims 1 to 9, characterized in that A and B each stands for the group $CH_3$— and y signifies a number from 1 to 50.

13. Coatings and moulding materials according to Claim 12, characterized in that the ratio of the number of groups $R_2$—Z— to the number x is in the range 1:10 to 1:20.

14. Coatings and moulding materials according to Claim 1, characterized in that Z stands for an alkylene group with 1 to 11 carbon atoms, an oxygen atom, an alkylenethioether group with 2 to 11 carbon atoms and an alkyleneamide group with 2 to 11 carbon atoms.

15. Coatings and moulding materials according to Claim 14, characterized in that Z stands for an alkylene group with 1 to 4 carbon atoms, an oxygen atom, an alkylenethioether group with 2 to 4 carbon atoms and an alkyleneamide group with 2 to 4 carbon atoms.

16. Process for improving the flow and increasing the slip of coatings and moulding materials, characterized in that an effective flow-improving and slip-increasing amount of polyester-group-containing siloxanes of formula I according to Claim 1 is added to the coatings and moulding materials.

17. Use of polyester-group-containing siloxanes of formula I according to Claim 1 as additives for coatings and moulding materials.